Europäisches Patentamt

European Patent Office

Office européen des brevets

(11) Veröffentlichungsnummer: **0 278 277**
**A1**

(12) **EUROPÄISCHE PATENTANMELDUNG**

(21) Anmeldenummer: **88100790.0**

(22) Anmeldetag: **20.01.88**

(51) Int. Cl.⁴: **G02B 26/02**

(30) Priorität: **23.01.87 DE 8701106 U**

(43) Veröffentlichungstag der Anmeldung:
**17.08.88 Patentblatt 88/33**

(84) Benannte Vertragsstaaten:
**AT BE CH DE ES FR GB GR IT LI LU NL SE**

(71) Anmelder: **Siemens Aktiengesellschaft Berlin und München**
**Wittelsbacherplatz 2**
**D-8000 München 2(DE)**

(72) Erfinder: **Jacobi, Hubert, Dipl.-Ing.**
**Damaschkestrasse 20**
**D-1000 Berlin 31(DE)**
Erfinder: **Volkmar, Ralf Reiner, Dipl.-Ing. (FH)**
**Triftstrasse 39**
**D-1000 Berlin 65(DE)**

(54) **Lichtwellenleiterschalter.**

(57) Es ist bekannt, die Schaltzunge eines Lichtwellenleiterschalters in einer zweiten Schaltstellung durch zwei Anschläge festzuhalten, die zu beiden Seiten der Schaltzunge vorgesehen sind.

Ein verstellbarer Anschlag, der die zweite von zwei Schaltstellungen einer Schaltzunge (4) des Lichtwellenleiterschalters bestimmt, wird durch einen federnden Arm (9) gebildet, der sich quer über die Schaltzunge erstreckt und an einem Ende ortsfest fixiert ist, während das andere, federnde Ende (13) mit z.B. einer Einstellschraube (12) gegen die Federwirkung des Arms (9) verstellt werden kann. Eine kegelförmige Ausprägung (14) des Arms ist mit ihrer Spitze gegen die Schaltzunge gerichtet und bildet einen Anschlag mit großer zeitlicher Konstanz.

Der sich quer über die Schaltzunge erstreckende einstellbare Arm ist weitaus montagefreundlicher und erleichtert die Einstellung der zweiten Schaltstellung.

## FIG 1

## Lichtwellenleiterschalter

Die Erfindung bezieht sich auf einen Lichtwellenleiterschalter mit einer quer zu ihrer Verlaufsrichtung auslenkbaren, aus Flachmaterial bestehenden Schaltzunge und mit einem in einer ersten von zwei Schaltstellungen der Schaltzunge eine Auflagefläche für die Schaltzunge bildenden Grundkörper, sowie mit einem die Lage der Schaltzunge in der zweiten Schaltstellung bestimmenden verstellbaren Anschlag.

Ein solcher Lichtwellenleiterschalter ist aus der DE-OS 31 38 686 bekannt. Bei diesem Lichtwellenleiterschalter trägt eine aus Federblech bestehende Schaltzunge auf ihrer Ober-und ihrer Unterseite jeweils ein Ende eines faserförmigen Lichtwellenleiters. Die Schaltzunge hängt außerdem einstückig mit einer Federblech-Platte zusammen, an deren Ober-und Unterseite jeweils die Enden von zwei weiteren faserförmigen Lichtwellenleitern befestigt sind. Die Federblech-Platte ist an einer hochpräzis-planen Oberfläche eines Grundkörpers fixiert, der in einer ersten Schaltstellung des Schalter zugleich als Auflagefläche für die Schaltzunge dient. In dieser ersten Schaltstellung stehen sich daher die Stirnseiten der Lichtwellenleiter von Platte und Schaltzunge, bei geeigneter Ausrichtung, paarweise exakt in gleicher Höhe gegenüber, da die Platte und die Schaltzunge bis in den µ-Bereich hinein die gleiche Dicke haben und in einer Ebene verlaufen. In einer zweiten Schaltstellung mit transversal zu ihrer Verlaufsrichtung ausgelenkter Schaltzunge sollen sich die Stirnseiten des unteren Lichtwellenleiters der Schaltzunge und des oberen Lichtwellenleiters der Federblech-Platte gegenüberstehen. Hierzu ist es erforderlich, für die Schaltzunge einen hochpräzisen Anschlag bereitzustellen, der den Bewegungsspielraum der Schaltzunge so begrenzt, daß die Stirnseiten der in der zweiten Schaltstellung zu koppelnden Lichtwellenleiter genau einander gegenüberstehen. Hierzu ist es schon aus der DE-OS 33 35679 bekannt, beidseits der Schaltzunge jeweils einen sich mit den Enden an der Federblech-Platte oder dem Grundkörper abstützenden trapezförmigen Federbügel vorzusehen, dessen Querstück gegen die Federwirkung des Bügels, mit Hilfe einer Schraube, die das Querstück durchsetzt und mit dem Grundkörper verbunden ist, dem Grundkörper mehr oder weniger stark angenähert werden kann. In Richtung zur Schaltzunge von den beiden Querstücken abstehende Ansätze werden von Querarmen der Schaltzunge untergriffen und bilden dadurch Anschläge, an welchen sich die Schaltzunge in der zweiten Schaltstellung abstützt. Zur Einstellung der Position der Schaltzunge in der zweiten Schaltstellung müssen dabei jedoch zwei Einstellorgane, nämlich die beiden Schrauben der Federbügel, verstellt werden. Dabei muß außerdem eine verschieden hohe Position der beiden Ansätze vermieden werden, weil sich die Schaltzunge sonst zunächst nur an einem Ansatz abstützt, um sich dann später geringfügig um die Längsachse zu drehen.

Aufgabe vorliegender Erfindung ist es daher, einen Lichtwellenleiterschalter der eingangs genannten Art so weiterzubilden, daß ein die Stellung der Schaltzunge in der zweiten Schaltstellung bestimmender langzeitstabiler Anschlag geschaffen wird, dessen Einstellung unkompliziert vorgenommen werden kann.

Zur Lösung dieser Aufgabe ist erfindungsgemäß als Anschlag ein mit einem Ende am Grundkörper fixierter und sich quer über die Schaltzunge erstreckender federnder Arm vorgesehen, und daß ein freies Ende des Armes durch eine Einstellvorrichtung mit dem Grundkörper verbunden ist und daß der Arm in einem mittleren, oberhalb der Schaltzunge befindlichen Abschnitt mit einem gegen die Schaltzunge gerichteten Vorsprung versehen ist.

Durch diese Ausgestaltung der Erfindung ist beim Eintellen des Anschlages nur noch die Betätigung z.B. einer einzigen Einstellschraube erforderlich.

In weiterer Ausgestaltung der Erfindung kann vorgesehen sein, daß der Vorsprung aus einer kegelförmigen Ausprägung des aus Bandmaterial bestehenden Arms besteht, die mit ihrer Spitze den Anschlag bildet.

Dadurch wird ein besonders präzise wirkender Anschlag geschaffen, bei dem zwischen Schaltzunge und Arm nur eine punktförmige Berührungsfläche vorhanden ist, so daß die Wiederkehrgenauigkeit des Anschlages sehr groß ist.

Im Rahmen vorliegender Erfindung kann ferner vorgesehen sein, daß der Arm ein einstückiger Bestandteil einer sich parallel zur Schaltzunge erstreckenden, mit dem Grundkörper verbundenen Befestigungsschiene ist.

Die zur Festlegung einer Federblech-Platte am Grundkörper verwendete Befestigungsschiene fixiert dadurch zugleich den Arm mit dem Anschlag am Grundkörper, wodurch die Montage des Lichwellenleiterschalters wesentlich vereinfacht wird.

Schließlich kann noch vorgesehen sein, daß mit der Schaltzunge auf der Seite des Arms ein zusätzliches Bauelement verbunden ist, das eine gegen den Anschlag gerichtete Plattform bildet.

Diese Ausgestaltung der Erfindung ermöglicht es vorteilhaft, den Anschlag symmetrisch an der Schaltzunge angreifen zu lassen, da das Bauelement, das mit der Schaltzunge verbunden ist, so ausgebildet sein kann, daß es das an der Oberseite der Schaltzunge fixierte Lichtwellenleiterende überbrückt, wodurch der Anschlag genau oberhalb des Lichtwellenleiterendes die Schaltzunge erfassen kann.

Ausführungsbeispiele eines Lichtwellenleiterschalters nach der Erfindung werden nachfolgend anhand von drei Figuren noch näher erläutert.

Dabei zeigen, jeweils vergrößert,

FIG 1 und FIG 2 den Lichtwellenleiterschalter mit in der zweiten Schaltstellung befindlicher Schaltzunge in Verlaufsrichtung der faserförmigen Lichtwellenleiter gesehen, und

FIG 3 den Lichtwellenleiterschalter von oben gesehen, wobei in den drei Figuren die zur elektromagnetischen Betätigung der Schaltzunge erforderlichen Teile nicht dargestellt sind.

Im einzelnen ist den Figuren zu entnehmen, daß der Lichtwellenleiterschalter einen aus einer massiven Metallplatte bestehenden Grundkörper 1 aufweist, der an einer Flachseite 2 mit einer hochpräzisen planen Oberfläche versehen ist. An dieser Flachseite 2 ist eine Federblech-Platte 3 fixiert, deren Dicke über den gesamten Bereich der Platte 3 eine besonders hohe Konstanz aufweist. Aus der Platte 3 ist eine Schaltzunge 4 freigeschnitten, die rechtwinklig zur Plattenebene mit ihrem freien Ende 5 ausgelenkt werden kann.

Zwei rechtwinklig zur Längserstreckung der Schaltzunge 4 am freien Ende 5 von dieser abstehende Ansätze 6 legen sich, wenn sich die Schaltzunge 4 mit ihrem freien Ende 5 in der Ebene der Platte 3 befindet, gegen die Flachseite 2 des Grundkörpers 1. Dadurch wird eine eindeutige Position der Schaltzunge 4 in einer ersten von zwei Schaltstellungen der Schaltzunge 4 definiert.

An der Ober-und Unterseite der Schaltzunge 4 ist jeweils ein faserförmiger Lichtwellenleiter 7 fixiert, ebenso an der Feder blech-Platte 3 in einem Bereich, in dem zwischen Schaltzunge 4 bzw. Platte 3 und Grundkörper 1 ein Abstand vorgesehen ist, der durch eine kanalartige Ausnehmung 8 im Grundkörper 1 realisiert ist.

Die einerseits an der Federblech-Platte, andererseits an der Schaltzunge 4 fixierten Lichtwellenleiter-Abschnitte sind so aufeinander ausgerichtet, daß die Achsen der Lichtwellenleiterabschnitte paarweise fluchten und in einer zur Richtung der Schaltzungen-Auslenkung parallelen Ebene verlaufen. Die Stirnflächen der einerseits an der Schaltzunge, andererseits an der Platte 3 fixierten Lichtwellenleiter stehen sich daher in der ersten Schaltstellung paarweise genau gegenüber, so daß verlustarme Koppelstellen zwischen den jeweiligen Lichtwellenleiterpaaren an der Ober-bzw. Unterseite von Schaltzunge und Federblech-Platte gebildet werden.

Wird die Schaltzunge aus der ersten Schaltstellung herausbewegt, so soll in einer zweiten Schaltstellung des Lichtwellenleiterschalters der an der Unterseite der Schaltzunge fixierte Lichtwellenleiter mit dem an der Oberseite der Federblech-Platte befestigten Lichtwellenleiter optisch gekoppelt werden. Hierzu ist es erforderlich, den Abstand des freien Endes 5 der Schaltzunge 4 von der Flachseite 2 des Grundkörpers 1, der die zweite Schaltstellung bestimmt, genau einzustellen.

Zu diesem Zweck ist ein federnder Arm 9 vorgesehen, der sich quer zur Längserstreckung der Schaltzunge 4 in der Nähe des freien Endes 5 der Schaltzunge 4 über diese hinwegerstreckt.

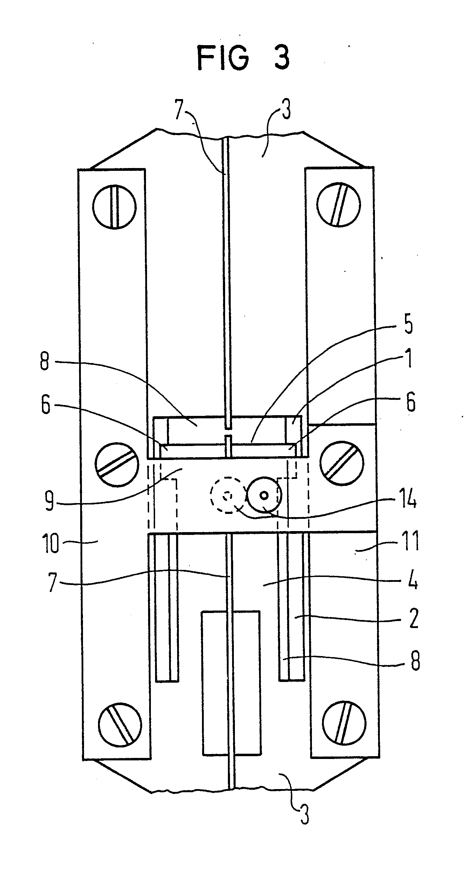

Wie insbesondere FIG 3 zeigt, kann dieser Arm 9 einstückiger Bestandteil einer Befestigungsschiene 10 sein, die parallel zum Verlauf der Lichtwellenleiter 7 gerichtet mit dem Grund körper 1 verschraubt ist und die Federblech-Platte 3 gegen die Flachseite 2 des Grundkörpers 1 gedrückt hält. Eine weitere solche Befestigungsschiene 11 erstreckt sich auf der anderen Seite der Schaltzunge 4 ebenfalls parallel zum Verlauf der Lichtwellenleiter 7 und fixiert die Federblech-Platte 3 auch auf dieser Seite am Grundkörper 1.

Der Arm 9 ist mit einer Vorspannung versehen und kann mit Hilfe einer Schraube 12, die ein über der Schiene 11 befindliches freies Ende 13 des Armes 9 durchsetzt und in den Grundkörper 1 eingedreht werden kann, entgegen der Wirkung der Vorspannung, gegen den Grundkörper 1 bzw. die Schiene 11 bewegt werden.

Der aus bandförmigem Material bestehende Arm 9 weist oberhalb der Schaltzunge 4 eine gegen die Schaltzunge 4 gerichtete kegelförmige Ausprägung 14 auf, deren Spitze als Anschlag für die Schaltzunge wirkt.

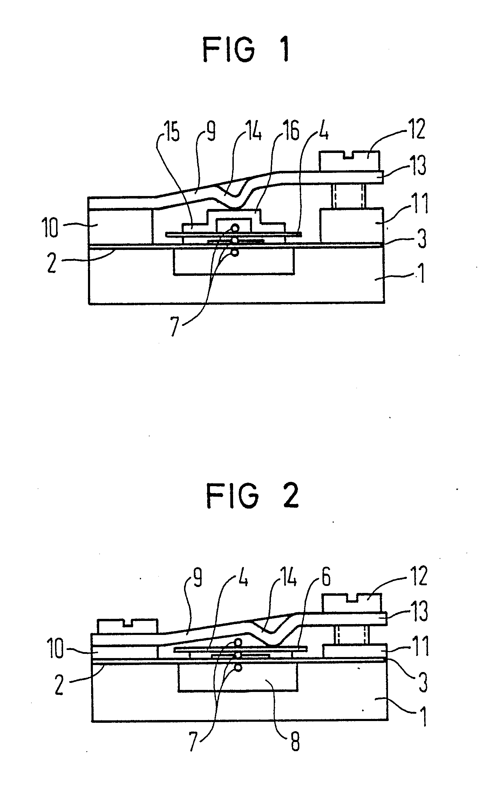

Wie FIG 2 zeigt, kann die Ausprägung 14 an dem Arm 9 so vorgesehen sein, daß sie die Schaltzunge 4 ohne Beeinträchtigung des an der Oberseite der Schaltzunge 4 fixierten Lichtwellenleiters 7 unmittelbar berührt, wenn sich diese in der zweiten Schaltstellung befindet.

FIG 1 zeigt, daß mit der Schaltzunge 4 ein Bauelement 15 verbunden werden kann, das sich quer zur Längserstreckung der Schaltzunge 4 über den an der Oberseite der Schaltzunge befestigten Lichtwellenleiter 7 erstreckt und eine Plattform 16 bildet, an der sich die Ausprägung 14, die sich in diesem Fall genau symmetrisch zur Schaltzunge 4 oberhalb des Lichtwellenleiters 7 befindet, abstützt, wenn sich die Schaltzunge in der zweiten Schaltstellung befindet.

Durch die kegelförmige Ausbildung des Anschlages für die Schaltzunge wird eine besonders präzise Justierung der Schaltzunge in der zweiten Schaltstellung gewährleistet.

**Ansprüche**

1. Lichtwellenleiterschalter mit einer quer zu ihrer Verlaufsrichtung auslenkbaren, aus Flachmaterial bestehenden Schaltzunge und mit einem in einer ersten von zwei Schaltstellungen der Schaltzunge eine Auflagefläche für die Schaltzunge bildenden Grundkörper, sowie mit einem die Lage der Schaltzunge in der zweiten Schaltstellung bestimmenden verstellbaren Anschlag, **dadurch gekennzeichnet**, daß als Anschlag ein mit einem Ende am Grundkörper (1) fixierter und sich quer über die Schaltzunge (4) erstreckender federnder Arm (9) vorgesehen ist, daß ein freies Ende (13) des Armes (9) durch eine Einstellvorrichtung (12) mit dem Grundkörper (1) verbunden ist und daß der Arm (9) in einem mittleren, oberhalb der Schaltzunge (4) befindlichen Abschnitt mit einem gegen die Schaltzunge (4) gerichteten Vorsprung (14) versehen ist.

2. Lichtwellenleiterschalter nach Anspruch 1, **dadurch gekennzeichnet**, daß der Vorsprung aus einer kegelförmigen Ausprägung (14) des aus Bandmaterial bestehenden Arms (9) besteht, die mit ihrer Spitze den Anschlag bildet.

3. Lichtwellenleiterschalter nach einem der Ansprüche 1 oder 2,
**dadurch gekennzeichnet**, daß der Arm (9) ein einstückiger Bestandteil einer sich parallel zur Schaltzunge (4) erstreckenden, mit dem Grundkörper (1) verbundenen Befestigungsschiene (10) ist.

4. Lichtwellenleiterschalter nach einem der vorhergehenden Ansprüche, **dadurch gekennzeichnet**, daß mit der Schaltzunge (4) auf der Seite des Arms (9) ein zusätzliches Bauelement (15) verbunden ist, das eine gegen den Anschlag gerichtete Plattform (16) bildet.

## FIG 1

## FIG 2

FIG 3

0 278 277

Europäisches
Patentamt

# EUROPÄISCHER RECHERCHENBERICHT

Nummer der Anmeldung

EP 88 10 0790

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | EP-A-0 075 917 (SIEMENS AG) <br> * Figuren 1,2; Seite 3, Zeilen 36,37; Seite 4, Zeilen 1-30; Anspruch 1 * <br> --- | 1 | G 02 B 26/02 |
| A,D | DE-A-3 335 679 (SIEMENS AG) <br> * Insgesamt * <br> ----- | 1 | |
| | | | RECHERCHIERTE SACHGEBIETE (Int. Cl.4) <br><br> G 02 B 26/00 |

Der vorliegende Recherchenbericht wurde für alle Patentansprüche erstellt

| Recherchenort | Abschlußdatum der Recherche | Prüfer |
|---|---|---|
| DEN HAAG | 26-04-1988 | MATHYSSEK K. |